# EUROPEAN PATENT SPECIFICATION

(11) **EP 1 077 597 B1**
(45) Date of publication and mention of the grant of the patent: **10.04.2002**
(21) Application number: 99921996.7
(22) Date of filing: 12.05.1999
(51) Int. Cl.: A01G 9/02

(54) **PLANT CONTAINER ASSEMBLY**
KULTURKASTENANLAGE
STRUCTURE DE BAC A PLANTES

(30) Priority: 12.05.1998 EP 98201550
(43) Date of publication of application: 28.02.2001
(73) Proprietor: Van Roey, Jan, 2330 Merksplas (BE)
(72) Inventor: Van Roey, Herman, 2310 Rijkevorsel (BE)
(74) Representative: Luys, Marie-José A.H.
(86) International application number: PCT/BE99/00062
(87) International publication number: WO 99/57961

(56) References cited:
- EP-A- 0 291 384
- DE-A- 2 503 758
- DE-A- 3 935 433
- FR-A- 2 545 319
- FR-A- 2 733 117
- US-A- 3 293 798
- US-A- 5 309 671
- US-A- 5 438 797

## Description

The present invention relates to an internal construction device for assembling a large plant from smaller plants as is described in the preamble of the first claim.

From US-A-3.293.798 a vertical tiered sectional planter is known, which comprises a circular flat pan shaped base positioned in a corresponding recess in the ground. A circular, pan shaped bottom section is nested within the base and rests with its bottom wall on a horizontal screen secured to the side-wall of the base section. An upstanding, vertically elongated standard is fixed within the base. Within the base, a pan shaped bottom section is nested. The bottom section contains a bottom wall with an opening accommodating the standard and secured to the side wall of the standard. A plurality of pan shaped sections, similar to the bottom section are similarly secured around the standard. The lower part of the side wall of each of the sections is perforated to allow moisture to escape in a controlled way through the side-wall perforations and to fall onto the peripheral parts of the bed there below. The lower part of each section is filled with a porous material upon which dirt is applied. The dimensions of the sections are chosen such that the side-walls of subsequent sections are spaced apart radially, so that between the top rim of the lower section and the side wall of the subsequent section a bed is created for receiving shoots.

The vertical tiered section planter disclosed in US-A-3.293.798 is designed as described above so as to provide a maximum access to the beds, while at the same time affording a maximum exposure of the shoots to sunlight and rain and occupying a minimum of ground area.

The object of the present invention is to provide a new, completely different device with which a full-grown plant or tree or shrub or the like can be assembled from small plants in a simple way, and in particular within a relatively short period of time.

This is achieved according to the invention with the measures described in the characterising part of the first claim.

The plant construction device of this invention is a device which comprises a plurality of casings that are applied above each other, and nested within each other in height direction of the device.

Each casing comprises a side wall for enclosing a central storage space for receiving dirt, and a top face and a bottom which are substantially open. The bottom of a subsequent casing has a smaller surface area than the top face of the casing underneath, so as to create space in the top face of the latter, between the side walls of both casings, for receiving plants.

It has now been found that the device of this invention is particularly suitable for constructing a full-grown plant or shrub or a tree like plant of any desired shape, starting from a plurality of smaller shrubs or tree plants, whereby after a relatively short period of time the device as such is no longer visible from the outside.

The device of this invention can be described as a construction device wherein a plurality of smaller plants can be assembled or housed to form to a tree or a shrub like plant or a large plant or the like. Thereby the device of this invention constitutes in fact a frame for containing the dirt, from which frame the plants may extend in all directions so as to form a shrub or tree, whereby the frame is no longer visible from the outside. Thereby the dirt of a specific level is not only accessible to the roots of plants housed therein, but also to the roots of the plants located in higher levels. The frame of the presumed full-grown plant obtainable with the device of this invention can be compared to the interior of a full grown tree, which is composed of a plurality of branched internal branches, which often don't carry any leaves and which form a frame for the outer, leave carrying branches. The frame of the present invention is provided to be hidden by the plants housed in it. Nor the frame as such, nor the result obtainable with such a frame can be derived from the state of the art, neither directly or indirectly.

It has surprisingly been found that with the device of this invention, the plants that are planted therein can grow to a larger size and attain a longer life time as compared to conventional planters, where the maximum size and the life time of the plants is limited. This is surprising since plants of shrubs and trees mostly only show a good growth and a long lifetime, when planted in full ground. An analysis of the problem has revealed that this must most probably attributed to the fact that in the device of this invention, the roots of the plants can dispose of a much larger volume of growing medium, which appears to approach the conditions provided by the soil of a garden or the like. This result cannot be attained with a conventional planter. Namely, because of the presence of a closed bottom in the conventional planter, the space that can be occupied by the roots is limited, thus limiting the growth of the plant. In the device of this invention on the other hand, the central storage volumes of subsequent casings, and thus the dirt contained therein, are connected to each other and transfer into each other in a jointless manner. The central storage spaces of subsequent casings appear to form one large growing volume for the roots. As a consequence, the roots and thus the plants, are allowed to grow to a much larger extent, from the casing wherein the plant is housed, towards the interior of the lower casings.

It has also surprisingly been found that the increased root space has a positive effect on the lifetime of the plant. The observation that in the device of this invention plants can attain longer lifetimes as compared to plants housed in conventional planters, must be attributed to the fact that the roots can dispose of a larger volume of dirt, thus improving the feed of which the plant can dispose. Also, because each plant has access to a larger volume of dirt, a more even distribution of moisture, nutrients and fertilisers, supplied from the outside to the device, can be achieved, thus promoting the plant feed. The dirt contained in subsequent casings in fact forms one large, growing medium, wherein the roots of the plants have a large degree of freedom to grow and develop themselves, which has a positive influence on the growth and lifetime of the plants.

In the device of this invention, each casing is connected to a support pole, so as to provide a sturdy construction, the size of which can be varied within wide ranges, by varying the size or shape of one or more of the casings or the number of casings in the device, without thereby involving the risk that the construction easily topples over upon an accidental bump. Namely, as the size of the individual casings and the number of superimposed casings increase, the weight of the device increases, and the centre of gravity is shifted towards the top of the device. Because the individual casings are connected to the support pole through their side wall, the bottom wall of the casing can be left out without thereby adversely affecting the stability of the device.

According to a first preferred embodiment of this invention, the device comprises a bottom casing, which is provided to be placed upon a bottom plate. Thereby, the bottom plate comprises means for allowing the device to be displaced. In that way it is possible to provide a device which can be displaced from one location to the other as a unity, without thereby having to disassemble the individual casings, and without thereby adversely influencing the life time and growth of the plants.

According to a third preferred embodiment of this invention, preferably means are provided for removably connecting the casing to the support pole. This allows the casings be commercialised as such and to attach the casings to the support pole when assembling the device. The removable mounting also allows to disassemble the casings from the support pole, in case for example it is desired to disassemble the device and displace the casings in an individual manner.

The means for removably connecting the casing to the support pole preferably comprise at least one support bar, the ends of which are provided to co-operate with holes in opposing sides of the side-wall of the casing, whereby the support pole comprises at least on hole for receiving said support bar. It is also possible to connect the ends of the support bar to the upper rim of the carrier, so as to hang the casing to the support pole.

In FR-A-2.733.117 a culture tower is disclosed which comprises a plurality of casings that succeed each other in height direction of the tower and are mounted on a rigid support. The rigid support is composed of three vertically extending rectilinear poles, regularly distributed along the wall of the structure. Every pole consists of a same number of profiles which engage each other in height direction of the structure, whereby each profile comprises a lateral restraint, for receiving a culture structure and maintaining subsequent culture structures at a desired distance from each other. The culture tower disclosed in FR-A-2.733.117 is intended to allow a large number of small vegetables, small plants and aromatics to be grown on a small ground area.

In US-A-5.438.797 a vertical planter is disclosed, with a plurality of spaced apart, tiered flower pots, centred about a segmented pole. Each flower pot has a bottom wall in which a large centre hole is provided in order to allow water to seep down from one flower pot to the flower pot beneath. The flower pots are supported in two ways. A first support means is formed by the dirt in the pot. As a second support means, each pot rests with its bottom onto a bar which extends through the segmented pole. The flower pots have a large central hole in order to allow water to seep down from one flower pot to the pot underneath. The vertical tiered planter disclosed in US-A-5.438.797 aims at increasing the planting area, without thereby increasing the floor space occupied by it. It allows polycultures, vegetables, flowers, strawberries and even potatoes to be cultured. US-A-5.438.797 does not disclose nor teach the technical features with which plants can attain longer life times and grow to larger sizes. Rather, the life time of the plants, as well as the dimensions of the vertical planter of US-A-5.438.797 are limited.

FR-A-2.545.313 relates to a device for the intensive culture of vegetal plants. Thereto, use is made of a device with the shape of a pyramid. The walls of the vertical floors of the pyramid are formed by laterally inclined plates. The inclination is provided to form a physical obstacle with a tendency to a guiding effect to the development of the roots towards the central zone of the pyramid.

The application possibilities offered by the devices known from the art are limited and are limited to providing a planter with which (1) the planting area can be increased, without thereby increasing the ground area occupied by the planter, (2) gardening can be facilitated because the planters are located at a distance from the floor, and (3) different types of plants can be grown in a small area. There is no teaching in state of the art to conceive or draft a planter as a frame for surrounding dirt for housing plants, whereby the frame is provided to be hidden by the plants and to be almost unobservable from the outside. Nor is there any teaching in the state of the art to use this frame for constructing shrubs or trees, the growing of which would otherwise take years. Neither is there any teaching to use this frame for constructing shrubs or threes from small plants which otherwise would not grow out towards a tree, such as for example creepers, rose plants etc. As has been explained above, the inventor attributes this finding to the fact that conventional planters comprise a bottom wall.

The man skilled in the art is namely of the opinion that the presence of a bottom wall is necessary so as to prevent the dirt contained in the planter to subside too much. The inventor has now found that any subsidence that may occur does not adversely influence the plant construction and can be replenished by supplying additional dirt or any other growth medium. Also in the vertical tiered planters known from the art the presence of a bottom wall is necessary to provide a sufficient stability to the planter. Because in the device of this invention the casings are hung to a support pole, which at its turn may be secured into the ground or a support bottom plate, a sufficient stability can be provided without necessitating the presence of a bottom wall in each casing.

The construction device of this invention for assembling full-grown plants solves the problem of many gardeners, who want to have in their garden one or more striking, large trees, bushes or plants, as an ornamental or separating element for their garden. Mostly, young, comparatively small plants are bought and planted, which subsequently may be cultivated into full-grown plants, since full-grown plants are mostly rather expensive to buy. In addition to this, upon transplanting a full-grown plant, there is a risk that the plant cannot adapt to the new conditions and dies off. In case a bottom plate is provided, the device of the present invention can be displaced without touching the roots of the plants, so that the risk that the plants would die off when displacing the device, because the roots cannot adapt to the new soil or growing environment, can be minimised. Also the device of this invention allows plants, which otherwise require a particular type of soil or growth medium, to be grown on a ground which would otherwise be incompatible with the plant. In addition to this, the growth medium with which the casings are provided, and the conditions of moisture and nutrients in a particular casing can be adapted to the nature of the plants contained therein.

Depending on the type of plant, it may moreover take a few to many years before the small plant has developed into to a large, full-grown plant. With the construction device of this invention, a full-grown plant can be assembled, starting from a plurality of smaller plants. This can be of particular importance, for example for creating a large buxus plant of the desired shape.

The invention is further elucidated in the attached figures and description of the figures.

Figure 1a and 1b show a view to a casing of the plant construction device of this invention, hung to the support pole.

Figure 2 shows the plant construction device of this invention in cross section.

Figure 3 is a view to a plant construction device of this invention whereby all casings have substantially similar dimensions.

In figure 4 a plant construction device is shown wherein the dimensions of the casings decrease in height direction of the device.

Figure 5 and 6 show a view to the internal plant construction device of this invention, hidden by plants.

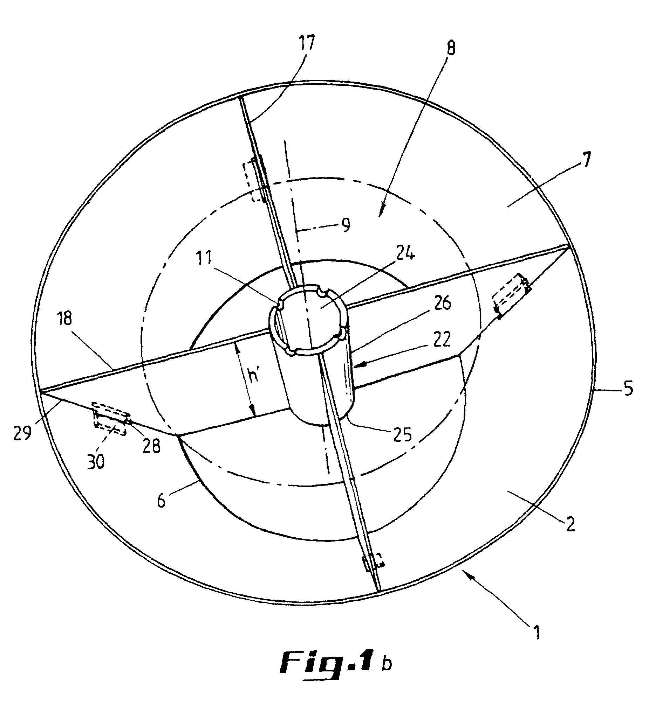

The plant construction device shown in figure 2 comprises at least one casing 1, 10 with a side wall 2, 12 enclosing a central storage space 8 for receiving dirt or any other solid growth medium.

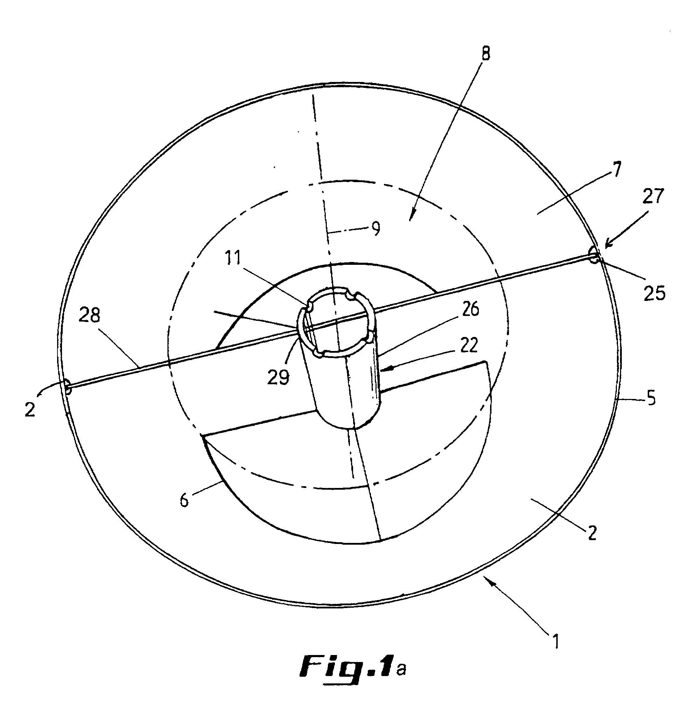

The casing 1 shown in figure 1a and 1b, comprises an upper face 3 and a bottom 4, said upper face 3 and bottom 4 being substantially open. Thereby the upper face 3 has a surface area which is approximately equal to or larger than the surface area of the bottom 4. In case the surface area of the upper face 3 is larger than the surface area of the bottom 4, the side wall 2 is inclined from the upper face 3 towards the bottom 4.

The casing 1 may have any desired shape. In one plant construction device a plurality of casings with widely varying sizes and shapes may be combined, so as to obtain a frame of a desired shape. The upper side 3 and the bottom 4 may have a same or a different shape. The upper side 3 and the bottom 4 may for example be oval, or have the shape of a circle, a square, or a rectangle, or any other desirable shape. The casing 1 shown in figure 1 for example has the shape of an inverted truncate cone. The casing 1 of this invention may be manufactured from various, generally known materials, for example metal, for example aluminium, zinc, plastic material, concrete, wood.

The dimensions of the casing 1, in particular the height of the wall 2 and the dimensions of the upper face 3 and bottom 4 may be varied within wide ranges, for example depending on the desired size of the final plant to be assembled and the nature and size of the plants that are used therein.

The plant construction device shown in figure 2 comprises a first lower casing 1, and a second upper casing 10. The second casing 10 may be nested partially in the central storage space 8 of the first casing 1. It is however also possible, as is shown in figure 2, that the bottom 14 of the upper casing 10 and the upper face 3 of the lower casing 1 coincide. If so desired, the bottom 14 of the upper casing 10 may be shifted towards the central storage space the lower casing 1.

Because the upper face 3 of the lower casing and the bottom 14 of the upper casing are substantially open, the central storage space 8 of the upper second casing 10 can pass into the central storage space 8 of the lower first casing 1 in a continuous manner. This allows that the roots of plants present in the second casing 10 may grow towards and into the first casing 1, thus allowing the roots to show an extensive growth and providing the possibility of obtaining strong, healthy and larger plants with an increased life time. Simultaneously, nutrients that are supplied via the second casing 10, may flow through the bottom 14 of the second upper casing 10 towards the first casing 1 underneath, so that in principle it suffices to deliver the nutriments through one casing.

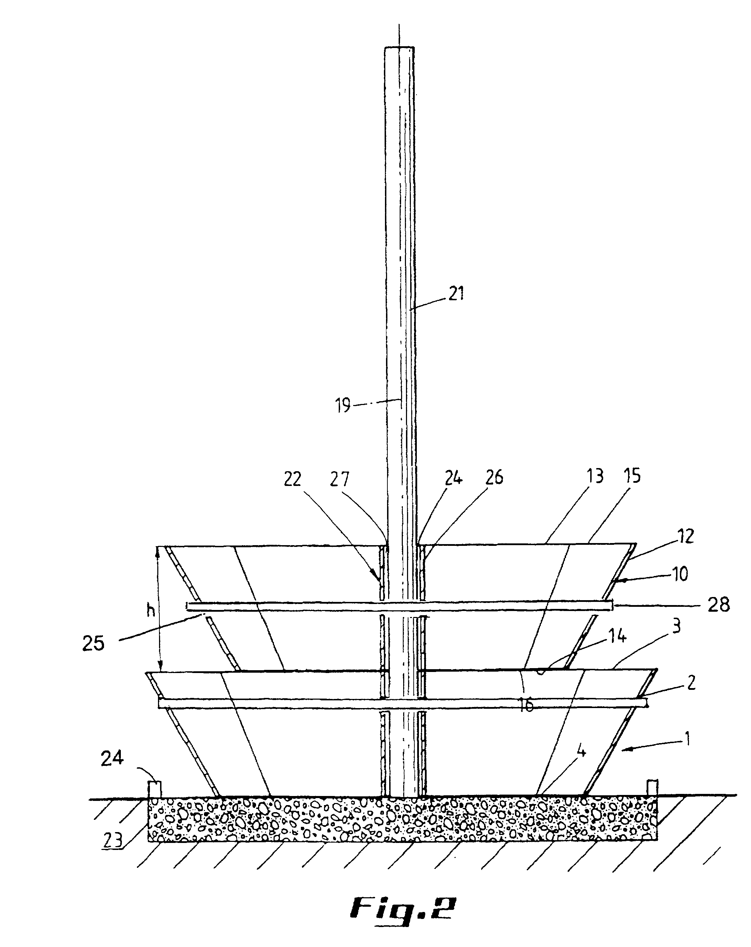

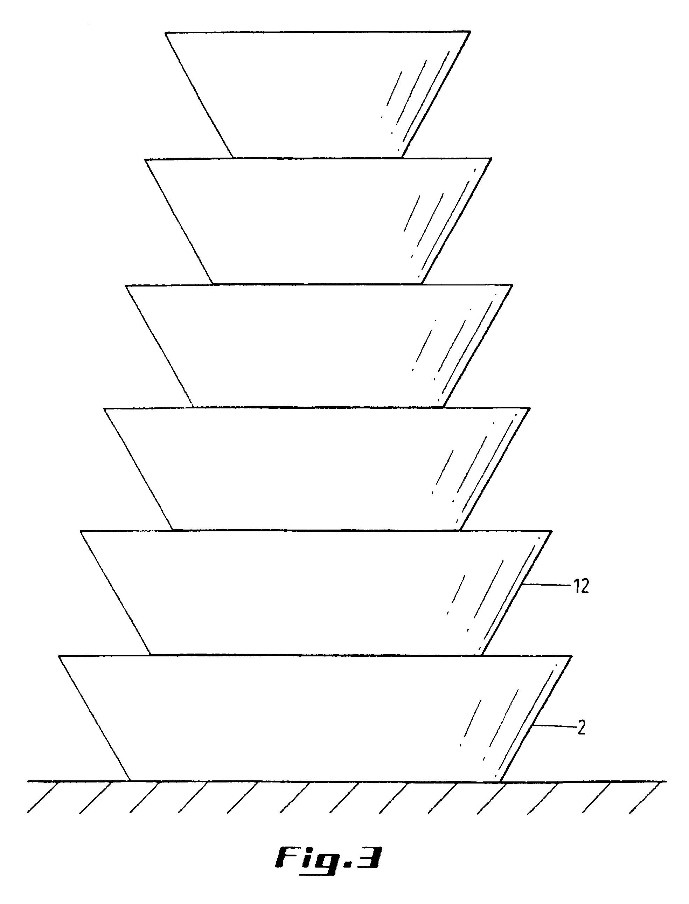

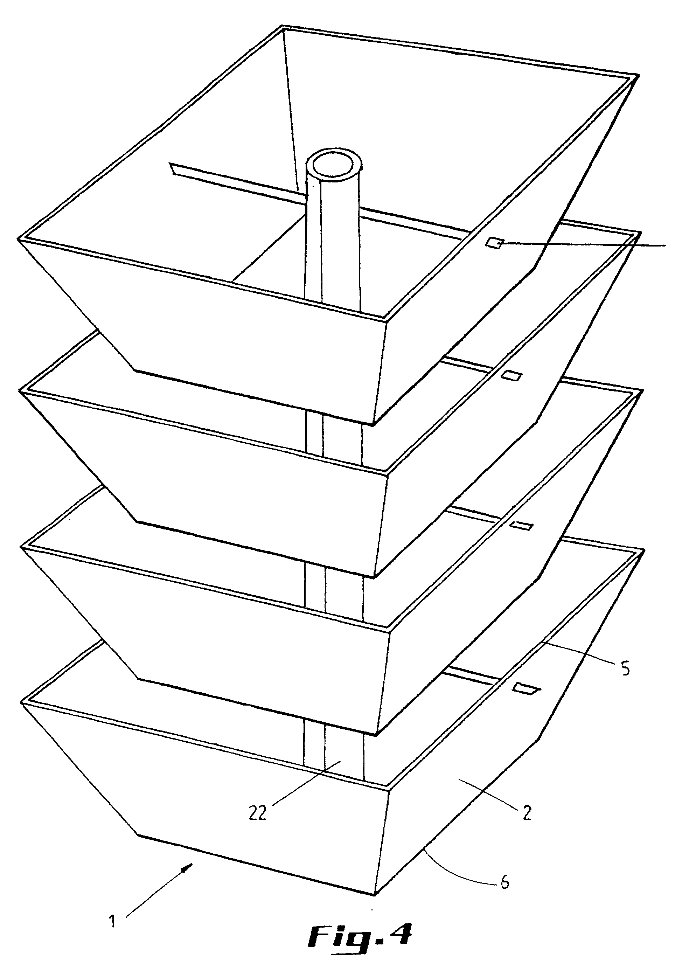

As is shown in figure 3 and 4, a plurality of casings 1, 10 can be combined so as to obtain a construction device of the desired sizes. In the embodiments shown in figures 3 and 4, respectively six and four casings, thus three and two assemblies are fitted on top of each other. Thereby, in the embodiments shown in figures 2, 3 and 4, the walls 2, 12 of casings 1, 10 positioned on top of each other, run substantially parallel to each other. It is also possible that the walls of an upper casing are more or less inclined than the walls of a casing underneath, for example in case it is desired to create an assembly with a particular shape, or to have plants of different sizes in the successive casings, and more or less space is required thereto.

The casing 1 preferably also comprises means 27 for removably attaching the casing to a support pole 22. These means 27 may for example comprise a bar 28 which is removably connectable to the side wall 2 of the casing 1. Thereto, means generally known to the man skilled in the art can be used. The support pole 22 preferably comprises in height direction thereof, a plurality of holes 29 for receiving support bars 28 there through. The side wall 2, 12 preferably comprises on opposing sides holes for receiving the support bar 28 therethrough.

Each casing 1 'may comprise one or more separation walls 17, 18, which may be connected to the support pole 22 or not. This allows to further increase the strength of the construction. The support pole 22 may be positioned centrally in the casing 1, or in any other desired position. The position of te support pole 22 will mostly depend on the size and shape of the final construction. The support pole 22 may for example be fitted axially or eccentrically. The separation walls 17, 18 may be connected permanently with the support pole 22, or removably, so as to facilitate the transport and storage of the casings and the construction. Thereto, the support pole 22 and the separation wall 17, 18 are provided with means generally known to the man skilled in the art, for example cooperating and engaging recesses and protrusions. The support pole 22 is preferably hollow. The wall 26 of the support pole 22 is preferably provided with perforations 11 in order to allow the casings 1, 10 to be irrigated from the inside.

The construction device of the invention may further comprise a bottom plate 23, with a hole for receiving the support pole 22, so as to allow the device, the plants included to be displaced as one unity. The bottom plate 23 may be placed in the ground or on top of it. Preferably at the edges of the bottom plate 23, hooks 24 or equivalent means are provided for allowing the device to be lifted. Also, by the presence of the bottom plate 23, the device is rendered suitable for placement on a wide variety of locations, such as for example concrete floors or streets or roof gardens.

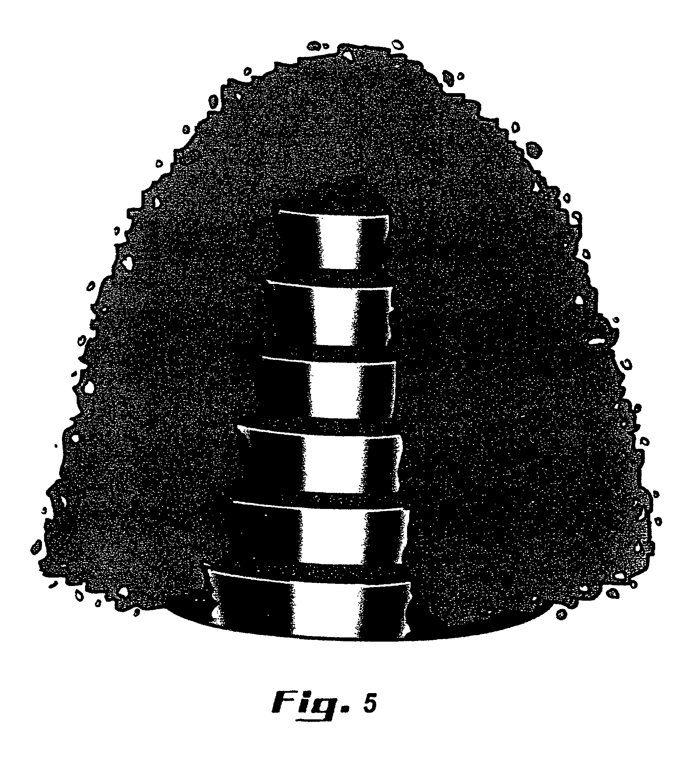

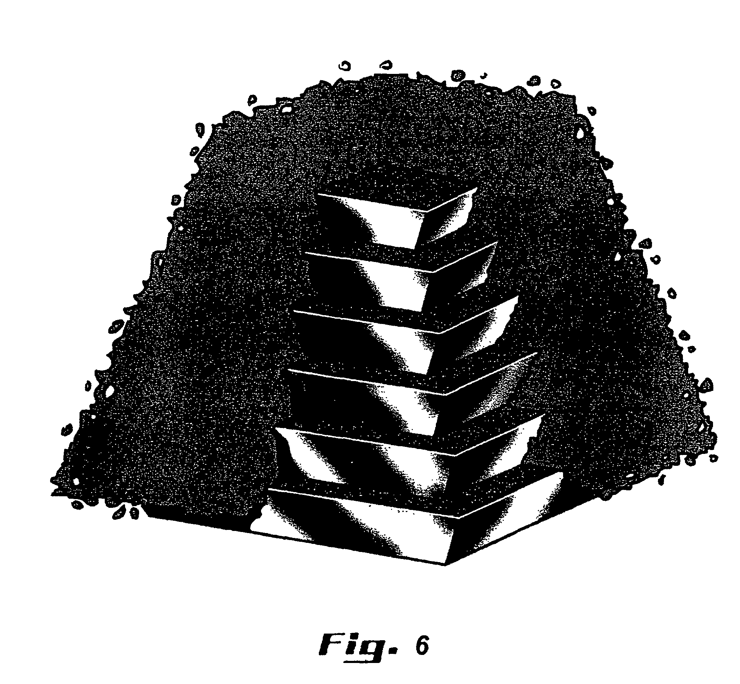

The construction device of this invention can be assembled by positioning the bottom plate 23. A first casing 1 is applied to the bottom plate 23 and hung to the support pole 22. The casing is filled with dirt, a second casing 10 is positioned upon the first casing 1, and hung to the support pole 22. Thereafter the plants are planted, along the upper edge 5 of the first casing 1 and between the side wall of the upper casing 10 and the casing underneath 1 (see figure 5 and 6). If so desired, additional casings may be added. The plants are preferably applied in such a way that they fill the space remaining between the upper edge 5 of the first casing and the wall 12 of the second casing 10, and that they substantially completely surround the side wall of the second casing 10, so that after some time this wall 12 after some time will hardly be visible from the outside. In the same way, additional casings may be added so as to construct a frame of the desired shape and size. In this way a frame can be constructed so as to obtain a tree or a shrub of any desired shape and size. It is for example also possible to provide a frame for constructing a wall covered with plants, or a hedge. In the plant construction device of this invention selected young plant material is planted progressively in a stepwise way, and trimmed so as to obtain an imitation of a grown up plant or to create a full grown plant of a desired shape. The device of this invention is particularly suitable for plants that are suitable to be trimmed and do not exhibit a too large shrub or tree growth, for example creepers, small roses, buxus, taxus, juniperus, cotoneaster, lavender, viburnum etc. Thereby, low growing plants can grow out to large, high plant shapes.

It is also possible to first hang the desired number of casings 1, 10 to the support pole 22, on top of each other, then to fill the casings with growth medium, and then to put in the plants. The man skilled in the art will generally chose the process offering the best prospects of success for obtaining the desired result, a.o. depending on the nature of the plants which have to be put into the assembly.

In the assembly of two casings shown in figure 3, the first and second casings have substantially the same shape, and the size of casings fitted on top of each other transversely decreases with increasing height. This allows to imitate a plant of which the size diminishes as a function of the height, thus to imitate a tapering plant.

As is shown in figure 4, it is possible to fit casings having substantially the same size on top of each other, if the upper side of the casings is larger than the bottom. This allows, a.o. to imitate a plant of which the size in transverse direction remains constant as a function of the height.

It is also possible to have the diameter or width of the plant increase with increasing height. This may be realised by fitting casings on top of each other, of which the diameter or width is increasing with increasing height of the construction. Thereby, it should always be taken into account that the upper face of the lower casing has a larger surface area than the bottom of the upper casing, so that between the side walls of the upper casing and the casing underneath an open space remains available to receive plants.

## Claims

1. An internal construction device for assembling a plant from a plurality of smaller plants, the device comprising
- a support pole (22) extending in height direction of the device,
- a plurality of superimposed retainers (1, 11) applied around the support pole (22) and nested within each other, the retainers (1, 11) having a central storage volume for receiving dirt and plants, and having a substantially open top face (3, 13)
- supporting means (27) for each retainer (1, 11), in which device a retainer (1) underneath comprises a side wall (2) and a top face (3) with a surface area, and a subsequent retainer (11) comprises a side wall (12) and a bottom face (14) with a surface area, the surface area of the top face (3) of the retainer (1) underneath being larger than the surface area of the bottom face (14) of the subsequent retainer (11) so as to create between the side walls (2, 12) of both retainers a space for receiving plants, **characterised in that** the retainer is a casing (1, 11) with a side wall (2, 12) and an open bottom face (4,14), **in that** the means for supporting each retainer comprise connecting means (17, 18, 25, 27, 28, 29) for connecting the side wall (2, 12) of the casing (1,11) to the support pole (22) and **in that** the central storage volumes of subsequent cases are connected to each other.

2. An internal construction device as claimed in claim 1, **characterised in that** the device comprises a bottom casing (1) provided to be placed upon a bottom plate (23).

3. An internal construction device as claimed in claim 2, **characterised in that** the bottom plate (23) comprises means (24) for allowing the device to be moved.

4. An internal construction device as claimed in any one of claims 1-3, **characterised in that** the connecting means (17, 18, 25, 27, 28, 29) are removably connectable to the support pole (22).

5. An intemal construction device as claimed in any one of claims 1-4, **characterised in that** the connecting means comprise at least one support bar (28) which extends through at least one hole (29) provided in the support pole (22), the ends of the support bar (28) being connected to opposing sides of the side-wall (2, 12) of the casing.

6. An intemal construction device as claimed in any one of claims 1-5, **characterised in that** the retainer (1, 11) is suspended to the support pole (22).

## Patentansprüche

1. Interne Aufbauvorrichtung zum Herstellen einer Kultur aus einer Vielzahl kleinerer Kulturen, wobei die Vorrichtung folgendes umfasst:
- einen Tragständer (22), der sich in Richtung der Höhe der Vorrichtung erstreckt,
- eine Vielzahl über einander gestapelter Gefäße (1, 11), die um den Tragständer (22) angebracht und in einander verschachtelt sind, wobei die Gefäße (11, 11) ein zentrales Lagervolumen für Erde und Pflanzen bereitstellen und eine im Wesentlichen offene obere Fläche (3, 13) aufweisen,
- Haltemittel (27) für jedes Gefäß (1,11),
wobei ein Gefäß (1) in der Vorrichtung unten eine Seitenwand (2) und eine obere Fläche (3) mit einer Oberflächenzone aufweist und ein nächstes Gefäß (11) eine Seitenwand (12) und eine Bodenfläche (14) mit einer Oberflächenzone aufweist, wobei die Oberflächenzone der oberen Fläche (3) des Gefäßes (1) unten größer ist als die Oberflächenzone der Bodenfläche (14) des folgenden Gefäßes (11), so dass zwischen den Seitenwänden (2, 12) der beiden Gefäße ein Raum zur Aufnahme von Pflanzen besteht, **dadurch gekennzeichnet, dass** das Gefäß ein Kasten (1, 11) mit einer Seitenwand (2, 12) und einer offenen Bodenfläche (4, 14) ist, die Mittel zum Halten jedes Kastens Verbindungsmittel (17, 18, 25, 27, 28, 29) zum Verbinden der Seitenwand (2, 12) des Kastens (1, 11) mit dem Tragständer (22) umfassen, und die mittleren Lagervolumina der auf einander folgenden Kästen mit einander verbunden sind.

2. Interne Aufbauvorrichtung nach Anspruch 1, **dadurch gekennzeichnet, dass** die Vorrichtung einen unteren Kasten (1) umfasst, der auf eine Bodenplatte (23) gestellt wird.

3. Interne Aufbauvorrichtung nach Anspruch 2, **dadurch gekennzeichnet, dass** die Bodenplatte (23) Mittel (24) aufweist, die das Bewegen der Vorrichtung erlauben.

4. Interne Aufbauvorrichtung nach einem der Ansprüche 1 bis 3, **dadurch gekennzeichnet, dass** die Verbindungsmittel (17, 18, 25, 27, 28, 29) abnehmbar und am Tragständer (22) verbindbar sind.

5. Interne Aufbauvorrichtung nach einem der Ansprüche 1 bis 4, **dadurch gekennzeichnet, dass** die Verbindungsmittel mindestens eine Tragstange (28) umfassen, die durch mindestens eine Öffnung (29) im Tragständer (22) reicht, wobei die Enden der Tragstange (28) mit den einander gegenüber liegenden Seiten der Seitenwand (2, 12) des Kastens verbunden sind.

6. Interne Aufbauvorrichtung nach einem der Ansprüche 1 bis 5, **dadurch gekennzeichnet, dass** das Gefäß (1, 11) am Tragständer (22) aufgehängt ist.

## Revendications

1. Dispositif de construction interne pour assembler une plante à partir d'une pluralité de petites plantes, le dispositif comprenant
- un poteau de soutien (22) s'étendant dans la direction de la hauteur du dispositif,
- une pluralité de récipients superposés (1, 11) appliqués autour du poteau de soutien (22) et nichés l'un dans l'autre, les récipients (1, 11) ayant un volume de stockage central pour recevoir de la terre et des plantes et ayant une face supérieure (3, 13) essentiellement ouverte,
- des moyens de soutien (27) pour chaque récipient (1, 11),
dans lequel dispositif un récipient (1) en dessous comprend une paroi latérale (2) et une face supérieure (3) avec une aire de surface, et un récipient suivant (11) comprend une paroi latérale (12) et une face inférieure (14) avec une aire de surface, l'aire de surface de la face supérieure (3) du récipient (1) en dessous étant plus grande que l'aire de surface de la face inférieure (14) du récipient suivant (11) de manière à créer entre les parois latérales (2, 12) des deux récipients un espace pour recevoir dès plantes, **caractérisé en ce que** le récipient est une caisse (1, 11) avec une paroi latérale (2, 12) et une face inférieure ouverte (4, 14), **en ce que** les moyens pour soutenir chaque récipient comprennent des moyens de connexion (17, 18, 25, 27, 28, 29) pour connecter la paroi latérale (2, 12) de la caisse (1, 11) au poteau de soutien (22) et **en ce que** les volumes de stockage centraux des bacs suivants sont connectés les uns aux autres.

2. Dispositif de construction interne selon la revendication 1, **caractérisé en ce que** le dispositif comprend une caisse de fond (1) prévue pour être placée sur une plaque de fond (23).

3. Dispositif de construction interne selon la revendication 2, **caractérisé en ce que** la plaque de fond (23) comprend des moyens (24) pour permettre au dispositif d'être déplacé.

4. Dispositif de construction interne selon une quelconque des revendications 1 - 3, **caractérisé en ce que** les moyens de connexion (17, 18, 25, 27, 28, 29) peuvent être connectés de manière amovible au poteau de soutien (22).

5. Dispositif de construction interne selon une quelconque des revendications 1-4, **caractérisé en ce que** les moyens de connexion comprennent au moins une barre de soutien (28) qui s'étend à travers au moins un orifice (29) prévu dans le poteau de soutien (22), les extrémités de la barre de soutien (28) étant connectées aux côtés opposés de la paroi latérale (2, 12) de la caisse.

6. Dispositif de construction interne selon une quelconque des revendications 1-5, **caractérisé en ce que** le récipient (1, 11) est suspendu au poteau de soutien (22).
